Europäisches Patentamt

(19) European Patent Office

Office européen des brevets

(11) Publication number: **0 193 095**
**A2**

# (12) EUROPEAN PATENT APPLICATION

(21) Application number: 86102146.7

(22) Date of filing: 19.02.86

(51) Int. Cl.⁴: **H 04 L 11/20**
**H 04 L 11/00**

(30) Priority: 25.02.85 US 705463

(43) Date of publication of application:
03.09.86 Bulletin 86/36

(84) Designated Contracting States:
BE CH DE FR GB IT LI NL SE

(71) Applicant: International Standard Electric Corporation
320 Park Avenue
New York New York 10022(US)

(72) Inventor: Yanosy, John Anthony, Jr.
60 Russell Road
Stratford, CT 06497(US)

(74) Representative: Villinger, Bernhard, Dipl.-Ing. et al,
Standard Elektrik Lorenz AG Patent- und Lizenzwesen
Postfach 300 929 Kurze Strasse 8
D-7000 Stuttgart 30(DE)

(54) Data communication network.

(57) A data communication network (10) includes a plurality of substantially indentical subsystems (14) each sub-system (14) exercising autonomous control over all data traffic associated therewith. In addition, each sub-system (14) exercises that control via a fully distributed multi-microcomputer architecture whereby the failure of any one element within the data communication network (10) has a minimal impact on the services provided thereby.

FIG.1

0193095

- 1 -

## DATA COMMUNICATION NETWORK

The present invention relates to a data communication network as set forth in the preamble of claim 1.

At the present time, numerous systems are available for providing data communication services among a plurality of users. In general, such systems are, or can be, categorized as local area networks (LAN); statistical multiplexers; computer networks; and voice/data switches (PABX).

By far, the most conventional and most widely used system is the local area network wherein a plurality of geographically proximate users are interconnected by means of a single physical medium. The most common differences between the various presently available LANs include the access mechanisms, the performance capabilities, both in speed and capacity resulting from those access mechanisms, and the communication protocols used for data transfer throughout the network. One major difficulty of conventional LANs is that a single communication medium, most frequently a coaxial cable, is required to connect all peripherals to the network. This constraint, inter alia, demands that such a network be carefully designed, ab initio, to support a pre-designated volume of data traffic. Unfortunately, when this capacity is exceeded, service is severely reduced. The reduction in service is most often manifested by an increased length of time before achieving access, as well as by an increased length of time for the completion of data transfer between peripherals after access to the network has been achieved.

Quite frequently, LANs can be further characterized as including either a central processor system or an independent subsystem system. In the first instance, i.e., the central processor system, the network includes a central processing unit through which all data traffic must flow. The central processing unit executes all the required communication protocol conversions as well as provides all necessary routing codes. One major difficulty with such a centralized processor system is that all data traffic must follow a data path through the central processor, even if the data is directed to a peripheral within the same subsystem as the originating peripheral or even if the data is directed to a peripheral functioning under the identical communication protocol. Such extended data paths and data path transfer times are inherently undesirable.

In the other instance, a LAN is arranged to remove the central processor and provide "independent" subsystems, each controlling the data traffic throughout that subsystem. However, to date, all such networks require each such "independent" subsystems to include a centralized processing unit. Hence, a bottleneck problem, similar to the above-discussed central processor system, is still imposed on the subscribers.

One major difficulty with any network dependent on a centralized processor, at either the network level or the subsystem level, is that all peripherals interconnected therewith are catastrophically dependent upon that unit. That is, when any given central processing unit fails, a vast number of subscribers are without service. This, of course, is absolutely unacceptable to some users, such as banking centers, or the military. Nevertheless, such a failure mode is quite undesirable for anyone interconnected with such a network.

The relatively newer statistical multiplexer systems provide data transport services between peripherals by multiplexing the data onto a shared line. The data transported via the shared line ultimately requires demultiplexing by another statistical multiplexer. There are some statistical multiplexers available that include packet assembly/disassembly and communication protocol conversion services. However, as with a LAN, the statistical multiplexer systems have a pre-designed data traffic capacity and when one such device fails, the entire network is severely impacted.

In general, computer networks evolved for the express purpose of providing subscribers access to the services offered by a large, centralized computer. Consequently, such networks, most frequently offered by computer manufacturers, are oriented toward terminal to computer access rather than the full interconnectivity of peripherals as in a data communication network. An additional drawback of such a computer network is that all traffic circulates through the host computer or, at the very least, the front end of the control processor unit thereof. This then becomes a substantial bottleneck when the number of terminals interconnected therewith is increased or if the total traffic increases. Again, the solution is generally to submit to a rather expensive redesign of the computer network topology or suffer with reduced services.

Present full service voice/data PABX's do provide full connectivity but are inherently limited by the interconnection mechanism for the data traffic. In addition, the capacity of conventional PABX's are limited by the inability of the internal computer architectures thereof to respond to the continued expansion of the processor capacity due to increased subscribers or traffic.

The technical problem to be solved by the present invention is to provide a easily expandable data communication network that provides consistent, reliable paket communication services simultaneously with any grouth thereof.

According to the invention, this technical problem is solved by the data communication network claimed in claim 1.

- 5 -

Further advantageous embodiments of the subject matter of the present invention can be seen from the subclaims.

A practical example will now be described in detail on the basis of the drawings, in which

Figure 1    shows a block diagram of a data communication network embodying the principles of the present invention and

Figure 2    shows a more detailed block diagram of a typical subsystem for use in the network shown in Figure 1.

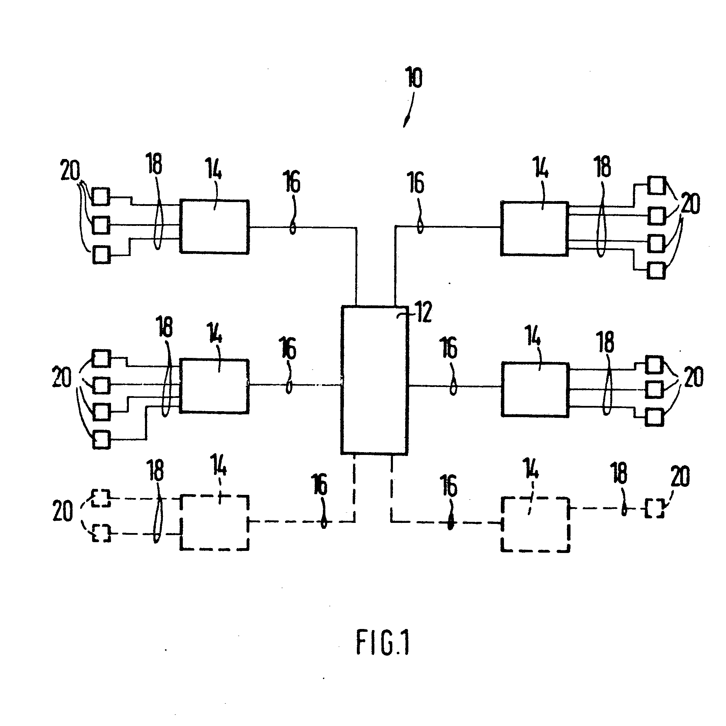

A data communication network, generally indicated at 10 in Figure 1 and embodying the principles of the present invention, includes a digital switching network 12, a plurality of substantially identical subsystems 14, first communication links 16 for establishing a communication path between the digital switching network 12 and each subsystem 14, second communication links 18 for establishing a communication path between each subsystem 14 and a plurality of peripherals 20. The data communication network 10 is preferably organized under a layered communication protocol based on the Open System Interface standard (OSI) as set forth by the International Standards Organization (ISO), hereinafter referred to as OSI-ISO.

A brief discussion of a layered communication network protocol and the task assignments for the nested layers therein is provided hereinafter. The network protocol of the present data communication network 10 provides a standard interface to the peripherals 20 regardless of the extended protocol thereof.

Further, the network protocol preferably includes the first three layers of the OSI-ISO protocol. That is, the network protocol includes the physical layer (L1), in one specific embodiment of the data communication network 10 wherein the digital switching network 12, such as used in an ITT SYSTEM 12 digital exchange, includes the capability to establish simplex paths only for the duration of the packetized data transmission thereacross; the virtual link layers (L2) provide the common logical link between subsystems 14 and support switched virtual circuits, datagrams and permanent virtual circuits. This layer i.e. (L2), of communication is established between subsystems 14 on a demand basis, i.e. at the time communications is required between subsystems 14 of the data communication network 10. The virtual link is terminated after the last

- ⅞ -

0193095

communication between the communicating subsystems. Therefore each subsystem 14 has as many virtual links established as there are other subsystems 14 interconnected therewith by the digital switching network 12.

The network layer (L3) provides the data communication services for devices attached to the standard level three interface of each subsystem 14. This layer, i.e. (L3) utilizes the conventional virtual links between subsystems 14 for transporting data associated with layer 3 services.

One important difference between the requirements of a layer two of, for example, a typical computer network and that provided by the data communication network 10 is the normally fixed relationship between the level two links and the fixed physical links between subsystems in the computer network versus the dynamically established level two links between the distributed subsystems 14 of the data communication network 10. Hence, there is no fixed physical link in the data communication network 10. In fact, the use of virtual links provides the capability to dynamically adjust the bandwidth between subsystems 14 for packet transfer by causing the layer one portion of the network protocol to transmit multiple packets simultaneously to a destination subsystem.

Another difference is the distributed nature of the data communication network 10; i.e, each subsystem 14 autonomously determines, based upon the communication needs thereof, if a virtual link is to be established. As a result, no central authority is required for establishing of any virtual link.

The dynamic establishing of virtual links, once recognized, means that there can be any number of virtual links established between subsystems 14. The frames of the subsystem 14 are, in one preferred scheme, distinguished by use of a system wide address having as address fields the originating and destination subsystem identification. This combined address thus identifies virtual links system wide.

Further, in association with the virtual link, a set of services is provided by, and distributed within, each subsystem 14. These services include, inter alia, flow control mechanisms.

In the preferred embodiment, for example, the digital switching network 12 of the ITT SYSTEM 12 digital exchange can be interconnected as growth requirements demand, with a plurality of similar digital switches 12, each digital switch 12 remaining nevertheless a discrete entity within a communication system thus formed. In one preferred embodiment, i.e. the ITT SYSTEM 12 digital exchange, the digital switching network 12 has a distributed control architecture wherein the control of the communication system is fully distributed to each digital switch 12 interfacing therewith. Thus, each digital switch 12 addresses only the mechanisms necessary for establishing a communication path through the system to interconnect different ones of the subsystems 14. In addition, each digital switch 12 includes means for autonomously setting up such a path, at the request of a subsystem 14, according to a uniform internal control scheme integral therewith. Thus, the digital switching network 12 does not change, or otherwise, manipulate any of the data packets launched thereinto. In fact, the subsystems 14 each individually attach appropriate digital switch commands to each data packet. The attached command control the routing of the packets though the digital switching network 12 by interrogating these commands to convey a packet of data between subsystems 14. In the terminology of this invention, this is considered a physical level function for physical path establishment.

In such an embodiment, the communication system or, if only a single digital switch 12 is used, the digital switch 12, provides the required physical connectivity between subsystems 14 as well as maintenance and alarm signals that are reflected, as necessary, back to each subsystem 14, thereby relieving the individual subsystems 14 of these functions and services. Nevertheless, each subsystem 14 includes the internal traffic distribution control, flow control, congestion detection and congestion control mechanisms required to ensure the fully autonomous nature thereof. The use of such a digital switch 12 permits the entire data communication network 10 to be modularly expandable by the inclusion of other subsystems 14 as well as the modular expansion of the communication system by inclusion of other digital switches 12. Advantageously, since the digital switch 12 accepts full packets of information and merely interrogates switch routing information attached thereto, all data transfers across the communication system are made directly between any two subsystems 14, i.e., in a single hop. The various features of the digital switch 12 are discussed in "ELECTRICAL COMMUNICATION" Vol. 56; No. 2/3; 1981.

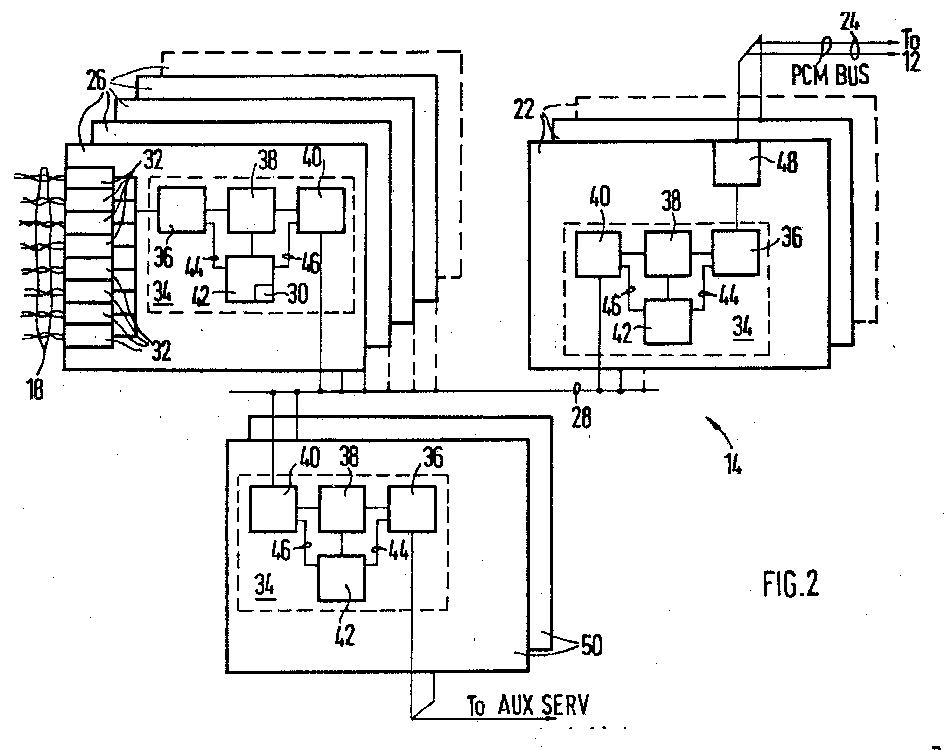

In the preferred embodiment, the first communication links 16, with respect to each subsystem 14, includes access to, for example, eight pairs of simplex, i.e. unidirectional, paths on a PCM link. Consequently, eight independent transmit channels and eight independent receive channels can transmit and receive packet simultaneously. As more fully discussed below, in this embodiment, the eight pairs of simplex paths allow eight separate network interface devices 22 shown in Figure 2 and more fully discussed below, to be interfaced to each PCM link, wherein there are two such links 24 connected within each autonomus subsystem 14 and thus constituting the first communication links 16. Further, the inclusion of, for example, a variable number from 1 to 4, such network interface devices 22 generally provides more than enough capacity for any subsystem 14.

Each subsystem 14 of the data communication network 10 is based on a multi-microcomputer fully distributed architecture. More specifically, as shown in Figure 2, each subsystem 14 includes at least one network interface device 22, at least one, but most frequently more than one, peripheral interface device 26 and a common intrasubsystem bus 28 for establishing the masterless flow of data traffic between all network interface devices 22 and all peripheral interface devices 26 within that particular subsystem 14. In addition, each peripheral interface device 26 is provided with means 30 for executing one, and only one, communication protocol conversion between any preselected external protocol of peripherals 20 and the internal uniform network protocol. The means 30 for executing the communication protocol conversion interfaces with the second communication links 18 for establishing communication, via, for example, a plurality of Universal Synchronous/Asynchronous Receiver/Transmitter (USART) devices 32, between the subsystem 14 and the peripherals 20. Consequently, the communication protocol conversion between the external peripheral communication protocol of a peripheral 18 and the uniform network communication protocol is, effectively, executed immediately upon data either entering the data communication network 10 from a peripheral 20 or immediately prior to exiting the data communication network 10. As a consequence, all intrasubsystem and intersubsystem communications are carried out according to the uniform network communication protocol in addition to intrasubsystem link level and intersubsystem virtual link level. The uniform network communication protocol provides control, command and regulation of all data traffic between the point of the communication protocol conversion and the launching of data packets into the digital switch 12 and/or the launching of data packets into another peripheral interface device 26 in the same subsystem 14, and/or the launching of data packets to a different peripheral 20 on the same peripheral interface device 26.

In the preferred embodiment, all network interface devices 22 are substantially identical throughout the entire data communication network 10. Similarly, all peripheral interface devices 26 are also substantially identical throughout the entire network 10. The only essential difference between any two peripheral interface devices 26 being the portion thereof dedicated to executing the preselected communication protocol conversion and any physical electrical interface difference. A different peripheral interface device 26 is provided in each subsystem 14 for each different external communication protocol used by any subscriber to that subsystem 14.

In addition, the peripheral interface devices 26 are serially interconnected to the intrasubsystem bus 28, that additionally interconnects with every network interface device 22 within that subsystem 14. Preferably, the intrasubsystem bus 28 is such that it permits the masterless intrasubsystem communication between and among any of the peripheral interface devices 26 and/or any given network interface device 22 within that subsystem 14.

In one embodiment, each subsystem 14 is designed so that each peripheral interface device 26 is implemented on a single printed circuit board, which printed circuit board, interconnects to a master board having the common intrasubsystem bus 28 etched thereon. Similarly, the same master board is adapted to accept a plurality of network interface devices 22 thereinto thereby establishing the intrasubsystem bus 28 within the subsystem 14. Consequently,

0193095

if data traffic across the plurality of peripheral interface devices 26 exceeds the predesigned capacity of any particular network interface device 22, the remaining data traffic can be transferred, or dumped, to another network interface device 22 without disruption of service to any user interconnected with any peripheral interface device 26. Traffic is also distributed across such network interface devices 22 to minimize this congestion probability. In addition, the master board is provided with a plurality of printed circuit board connectors to allow new boards, whether peripheral interface devices 26 or network interface devices 22, to be interconnected thereto. Consequently, each subsystem 14, and thus the entire data communication network 10, is modularly expandable and a redesign for expansion thereof is both unnecessary and unwarranted.

In the preferred embodiment, the number of printed circuit boards interconnected with the master board is limited by the length of the common intrasubsystem bus 28 which bus 28 includes a data tranmission medium and a collision detection medium distinct from each other. In the preferred embodiment, the mechanism for collision detection is effected by either changing a voltage level or a current level thereon. Hence, to ensure accuracy and to avoid collisions due to time/distance difficulties, the common intrasubsystem bus 28 is usually limited to about six feet.

In the preferred embodiment, each peripheral interface device 26 and each network interface device 22. includes a data transport controller 34 having software implementating and regulating all data traffic flow across that particular board and to distribute the data traffic to adjacent boards should the traffic thereacross become excessive. In this fashion, the intrasubsystem communication between peripheral interface devices 26 and network interface devices 22 is limited only by the speed of the data transport controller 34 located on each device respectively. Each data transport controller 34 is substantially completely identical to every other data transport controller 34 throughout each subsystem 14 and hence the network 10. Preferably, each data transport controller 34 includes a device interface controller 36, a storage medium 38, a bus interface controller 40 and a microcomputer 42. Each data transport controller 34 is arranged such that the only direct connection between the microcomputer 42, thereof, and the device interface controller 36 is via one set of interrupt/channel attention lines 44. Likewise the microcomputer 42 is only directly connected to the bus interface controller by another set of interrupt/channel attention lines 46.

In addition, each network interface device 22 interfaces with the eight pairs of simplex paths to the digital switch 12, via a PCM bus interface 48, and, hence, all traffic entering that network interface device 22 is directly and substantially, immediately, launched into the digital switch 12.

The PCM bus interface 48 is adapted to information and establish paths for that information via the two links 24 (PCM bus 24). Thus, the data traffic across the data communication network 10 is maximized and the conventional centralized processor bottleneck is avoided. Furthermore, even if one or more peripheral interface device 26 or network interface device 22 becomes a bottleneck, the remaining such devices, 26 or 22, within that subsystem 14 are nevertheless undisturbed and continue to provide maximum service to the subscriber.

In the preferred embodiment, primarily because of the modularity of the subsystems 14, each subsystem 14 can be easily provided with one or more means 50 for executing any one or more desired application programs. For example, the subscribers to a particular subsystem 14 may desire an application program to perform a more complex protocol conversion whereby more sophisticated communication can be intercommunicated either within that particular subsystem or across the digital switch 12. In addition, such application programs may include what is generally referred to as "value added services" such as billing, data base provision, routing, or the like. Furthermore, the means 50 can be adapted to interface with an external service provider to introduce auxiliary services to subscribers. In one embodiment, such a gateway interface device 50 can be provided external to one of the subsystems 14 and be accessible to all subsystems 14 via the digital switch 12.

Another major advantage of providing a common masterless intrasubsystem bus 28 is the removal of simultaneous traffic by more than one device and the avoidance of data loss due to collisions. In addition, once the intrasubsystem bus 28 is accessed, almost the entire bandwidth becomes available to the subscriber and, consequently, data traffic flow is more rapid. Further, the arrangement of the network interface devices 22, i.e., including a pair of PCM links 24 interfacing with the digital switch 12, effectively provides unlimited bandwidth transfer of data through the digital switch 12. In addition, the network interface device 22 includes, programmed within the data transport controller 34 thereof, the uniform communication protocol to transport packets from/to the networking medium 12 and provides enveloping leaders and trailers thereon that direct the digital switch 12, via the PCM links 24, to set up a path and, preferably, as the last data is launched, to immediately begin tearing down that same path. Hence, by virtue of the immediate teardown upon the trailing edge of the data packet, i.e. the in-band user provided command and controls, time is not lost by having to transmit a separate command to digital switch 12. Thus, access to the switch 12 is maximized for all subscribers to all subsystems 14 interconnected to the system 22.

The second communication links 18 for establishing communication between any subsystem 14 and a plurality of peripheral devices 20 associated therewith can be any conventional form of such interconnection, such as sets of twisted pairs of wires.

Preferably, however, the second communication links 18 from the subsystem 14 to the peripherals 20 is interconnected in a manner that ensures that all peripherals 20 functioning according to the same communication protocol are interconnected with the same peripheral interface device 26 within the subsystem 14. In the preferred embodiment, each peripheral interface device 26 is adapated to interconnect with, for example, eight communication paths of the second communication link 18. Further, the communication path of the link 18 is accessible by multiple external peripherals 20. Advantageously, if more peripherals 20 operating according to a particular communication protocol than can be sustained by one peripheral interface device 26, another peripheral interface device 26 can be added to execute the same communication protocol conversion and thus accept additional peripherals 20 operating under that communication protocol. Furthermore, in the preferred embodiment, the maximum number of peripheral interface devices 26 is about eight boards. As a consequence, each subsystem 14 is capable of handling a maximum of about 64 to 200 individual subscribers dependent on the magnitude of the data traffic. Further, the digital switch 12, for example, the digital switch 12 as used in the ITT SYSTEM 12 digital exchange, is capable of interconnecting with over 2000 subsystems 14. Thus, as easily determined, the present data

0193095

communication network 10 is adapted to sustain massive capacities of data communication with reduced transit times.

The primary advantages of the present data communication network 10 are that it is capable of growing as needed in a smooth, although modular, fashion without requiring an expensive re-design each time one of the subsystem 14 is expanded. Further, the performance, with respect to each subscriber, is maintained constant and the primary limitation is the individual microcomputer 42 of each data transport controller 34 on each interface card, 22, 26 or 50, which, as previously mentioned, are capable of shunting off or throttling excess traffic to avoid bottlenecking therethrough. Furthermore, the control of data traffic throughout the entire data communication network 10 is fully distributed such that any failure therein occasionally impacts traffic among the remaining functioning subsystem 14. This is a dramatic contrast to systems requiring any form of centralized processing whereby when the centralized processor fails, the entire network simultaneously fails.

Although the present invention has been described with regard to an exemplary embodiment, it is understood that this is not a limitation and that other arrangements and configurations may be developed that are, nevertheless, within the scope and spirit hereof.

0193095

1.	Data communication network (10) having a digital switching network (12), a plurality of substantially identical subsystems (14), a plurality of first communication links (16) for establishing a communication path between the digital switching network (12) and each subsystem (14), a plurality of second communication links (18) for establishing a communication path between each subsystem (14) and a plurality of peripherals (20) being characterized in that it includes a data transport controller (34), associated with each such subsystem (14), for autonomously controlling all data traffic thereacross, said data transport controller (34) being substantially identical for each said subsystem (14) throughout said data communication network (10) and means (30), associated with each said subsystem (14), for executing a single communication protocol conversion, said means (30) interfacing with each said first communication link (16) whereby a uniform communicaiton protocol is employed for all intrasubsystem and intersubsystem data transfer throughout said data communication network (10).

2.	Data communication network (10) according to claim 1, characterized in that each said subsystem (14) includes means (50) for accessing auxiliary services.

3.    Data communication network (10) according to claim 1 or 2, characterized in that said second communication links (18) are adapted to sustain simultaneous bidirectional data communication between said digital switching network (12) and said subsystem (14).

4.    Data communication network (10) according to any of the above claims, characterized in that each said subsystem (14) comprises at least one discrete network interface device (22), each said network interface device (22) incorporating said data transport controller (34).

5.    Data communication network (14) according to claim 4, characterized in that each said subsystem (14) comprises at least one discrete peripheral interface device (26), each said peripheral interface device (26) including said communication protocol conversion means (30).

6.    Data communication network (10) according to claim 5, characterized in that it includes a masterless intrasubsystem bus (28) having said peripheral interface devices (26) and said network interface devices (22) connected thereto.

7.    Data communication netowrk (10) according to claim 6, characterized in that all said second communication links (18) associated with each said peripheral interface devices (26) only communicate with peripherals (20) having said single communication protocol.

8.    Data communication network (10) according to claim 5, characterized in that each said data transport controller (34) for each said subsystem (14) includes a plurality of substantially identical microcomputers (42) distributed therein, each said microcomputer (42) controlling a portion of said data traffic within said subsystem (14).

9.    Data communication network (10) according to claim 8, characterized in that said microcomputers (42) throughout said data communication network (10) are substantially identical.

FIG.1

0193095

FIG.2